# EUROPÄISCHE PATENTSCHRIFT

(11) **EP 2 595 930 B1**
(45) Veröffentlichungstag und Bekanntmachung des Hinweises auf die Patenterteilung: **24.06.2020**
(21) Anmeldenummer: 11735995.0
(22) Anmeldetag: 15.07.2011
(51) Int. Cl.: C03C 3/087, C03C 3/097, C03C 10/12, C03B 32/02, F24C 15/10, C03C 4/02, H04R 25/00, H05B 6/12

(54) **GLASKERAMIK ALS KOCHFLÄCHE FÜR INDUKTIONSBEHEIZUNG MIT VERBESSERTER FARBIGER ANZEIGEFÄHIGKEIT UND WÄRMEABSCHIRMUNG UND VERFAHREN ZUR HERSTELLUNG EINER SOLCHEN KOCHFLÄCHE**
GLASS CERAMIC AS A COOKTOP FOR INDUCTION HEATING HAVING IMPROVED COLORED DISPLAY CAPABILITY AND HEAT SHIELDING AND METHOD FOR PRODUCING SUCH A COOKTOP
VITROCÉRAMIQUE UTILISÉE COMME SURFACE DE CUISSON POUR CHAUFFAGE PAR INDUCTION, PRÉSENTANT UNE MEILLEURE CAPACITÉ D'AFFICHAGE EN COULEUR ET UNE MEILLEURE PROTECTION THERMIQUE, AINSI QUE PROCÉDÉ DE FABRICATION DE LADITE SURFACE DE CUISSON

(30) Priorität: 23.07.2010 DE 102010032112
(43) Veröffentlichungstag der Anmeldung: 29.05.2013
(73) Patentinhaber: Schott AG, 55122 Mainz (DE)
(72) Erfinder: SIEBERS, Friedrich, 55283 Nierstein (DE); WEISS, Evelin, 55131 Mainz (DE); GABEL, Falk, 65388 Schlangenbad (DE)
(86) Internationale Anmeldenummer: PCT/EP2011/003540
(87) Internationale Veröffentlichungsnummer: WO 2012/010278

(56) Entgegenhaltungen:
- EP-A2- 2 226 303
- WO-A1-2011/089220
- WO-A2-2010/137000
- DE-A1-102008 050 263
- DE-U1-202010 014 361
- US-A1- 2005 252 503

## Beschreibung

Die Erfindung bezieht sich auf eine Glaskeramik als Kochfläche für Induktionsbeheizung mit verbesserter farbiger Anzeigefähigkeit und Wärmeabschirmung bestehend aus einer transparenten, eingefärbten Glaskeramikplatte mit Hochquarz-Mischkristallen als vorherrschender Kristallphase sowie auf ein Verfahren zu deren Herstellung und deren Verwendung. Transparente, eingefärbte Glaskeramik-Kochflächen sind in Aufsicht schwarz und verhindern damit die Durchsicht auf die technischen Einbauten unter der Kochfläche.

Kochfelder mit einer Glaskeramikplatte als Kochfläche sind gängiger Stand der Technik. Solche Glaskeramikplatten liegen üblicherweise als ebene Platten vor oder sind dreidimensional verformt.

Je nach der Art der Beheizung unterscheidet man verschiedene Typen von Glaskeramik-Kochflächen. Strahlungsbeheizte Kochflächen sind solche bei denen durch Elektroenergie Strahlungsheizkörper aufgrund ihres Ohm'schen Widerstands zum Glühen gebracht werden. Die am weitesten verbreiteten Bandheizkörper haben maximale Werte der abgegebenen Strahlung im Wellenlängenbereich von etwa 1600 bis 3000 nm. Alternativ können die Strahlungsheizkörper auch aus Halogenstrahlern bestehen. Diese erhitzen sich schneller und strahlen bei kürzeren Wellenlängen mit maximalen Werten der Strahlung im Bereich von etwa 1000 bis 1600 nm.

Um schnelle Ankochzeiten zu erreichen, soll der größte Teil der Wärmestrahlung direkt auf den Topfboden durch die Glaskeramikplatte durchgelassen werden und dort absorbiert werden. Deshalb sind höhere Transmissionswerte im Infraroten bei 1600 nm von größer 45 % gewünscht. Übliche Glaskeramik-Kochflächen die im Markt etabliert sind liegen bei ca. 75 %.
Bei Induktionskochflächen wird die Energie über elektromagnetische Wellen die in Spulen erzeugt werden direkt in den metallischen Topfboden eingekoppelt und dort über Wirbelströme absorbiert. Durch diese direkte Beheizung lassen sich kurze Ankochzeiten erreichen. Die Glaskeramikplatte wird nun über den erhitzten Topfboden erwärmt und leitet diese Wärme nach innen auf die Einbauten unter der Glaskeramikplatte weiter.
Bei gasbeheizten Glaskeramik-Kochflächen enthalten die Glaskeramikplatten üblicherweise Bohrungen in die die Gasbrenner integriert werden. Je nach Art der Flamme und der Nähe der Flamme zu dem Rand der Bohrungen ergeben sich unterschiedliche thermische Belastungen. Bei sehr starken und tiefer liegenden Gasbrennern sind diese so hoch, dass der Einsatz einer temperaturstabilen Glaskeramik statt eines Glases erforderlich wird. Auch bei gasbeheizten Kochflächen können sich die technischen Einbauten unter handelsüblichen Glaskeramikplatten stark erwärmen aufgrund der Wärmestrahlung die von der Gasflamme abgegeben wird.
Speziell für induktions- und gasbeheizte Glaskeramik-Kochflächen ist die hohe Infrarot-Transmission handelsüblicher Glaskeramikplatten daher eher von Nachteil.
Die verbesserte Wärmeabschirmung ist für besondere Betriebszustände beim Einsatz von Kochflächen von Bedeutung. Bei Induktionskochflächen mit Boosterfunktion wird am Anfang des Kochvorgangs vorübergehend höhere Leistung bereitgestellt um die Kochzeiten zu verkürzen. Wenn es dabei zu hohen Temperaturen kommt weil dies nicht rechtzeitig von der Steuerungselektronik erkannt und die Leistung abgeregelt wird, kommt es zu einer übermäßigen Erhitzung des Topfbodens. Ein weiterer Betriebszustand mit übermäßiger Erhitzung des Topfbodens kann auftreten, wenn der Topf leer kocht und sich dabei durch das fehlende Kochgut aufheizt. In solchen seltenen Betriebszuständen, die aber von der Glaskeramik-Kochfläche toleriert werden müssen, kann es zum Erhitzen des Topfbodens auf bis zu etwa 500°C kommen. Dabei wird eine erhöhte Wärmestrahlung frei. Bei solchen Betriebszuständen kommt es kurzzeitig zu einer erhöhten Wärmestrahlung die die technischen Einbauten unter der Glaskeramikplatte beansprucht.
Der technische Aufbau von Induktionskochflächen unter der Glaskeramikplatte besteht aus Spulen die das induktive Feld erzeugen. Die Drähte dieser Spulen sind mit einer Kunststoffisolierung versehen. Weitere empfindliche Einbauten sind beispielsweise elektrooptische Sensoren die der Temperaturmessung des Topfbodens dienen. Weiterhin gibt es für die Temperaturmessung Kontaktelemente die ebenfalls mit organischen Materialien gekapselt sind. Auch die elektrischen Zuführungen sowie Leuchtdioden (LED) und Farbanzeigen sind mit organischen Materialien gekapselt und sehr empfindlich. Oftmals werden daher bei Induktionskochflächen zwischen den technischen Einbauten und der Glaskeramikplatte thermisch isolierende Materialien wie z. B. glimmerhaltige Platten und Folien zur Wärmeabschirmung angeordnet. Der Einbau und die spezielle Ausführung dieser Abschirmungen sind mit höherem Aufwand verbunden da unter anderem Bereiche für Displayfenster oder optische Sensoren ausgespart werden müssen, andererseits eine zuverlässige Wärmeabschirmung aller kritischen Bereiche gewährleistet sein muss. Insgesamt ist es also wünschenswert die Glaskeramikplatte selbst mit einer höheren Wärmeabschirmung zu versehen.

Für induktive oder gasbeheizte Glaskeramik-Kochflächen ist die geforderte Temperaturunterschiedsfestigkeit niedriger als für strahlungsbeheizte Kochflächen. Während für den sicheren Einsatz von strahlungsbeheizten Kochflächen Temperaturunterschiedsfestigkeiten von größer 700 °C gefordert sind, liegt diese für induktive oder gasbeheizte Kochflächen bei Werten unter 600 °C und bei Systemen mit aufwändiger elektronischer Regelung zum Teil bei Werten von kleiner 400 °C. Da die Temperaturunterschiedsfestigkeit im Wesentlichen auch durch die thermische Ausdehnung mitbestimmt wird, kann die Glaskeramik für induktiv- oder gasbeheizte Kochflächen höhere Werte der thermischen Ausdehnung besitzen. Während für strahlungsbeheizte Kochflächen gängige Spezifikationen für Kochflächen ca. 0 ± 0,15.10⁻⁶/K sind, kann dieser Wert gemessen zwischen Raumtemperatur und 700 °C für induktive und gasbeheizte Glaskeramik-Kochflächen bis zu 0 ± 2.10⁻⁶/K betragen. Damit werden breitere Zusammensetzungenbereiche für die Darstellung von Glaskeramiken zugänglich. Weiterhin ist es vorteilhaft, dass sich damit die thermische Ausdehnung besser an andere Werkstoffe wie z. B. die anorganischen Farben mit denen Kochflächen dekoriert werden anpassen lässt. Dies bedeutet geringere Spannung in den dekorierten Bereichen und damit erhöhte Festigkeiten der Glaskeramikplatten.

Die verbesserte farbige Anzeigefähigkeit stellt eine weitere wesentliche Anforderung an neue Kochflächen dar. Zur Verbesserung des Bedienungskomforts und für den sicheren Betrieb sind moderne Glaskeramik-Kochflächen mit farbigen Anzeigen wie 7-Segmentanzeigen oder Betriebsanzeigen ausgestattet, die unterhalb der Glaskeramikplatte eingebaut werden.
Farbige Anzeigen geben dem Benutzer Informationen über den eingeschalteten Zustand der einzelnen Kochzonen, der Reglerstellung und auch ob die Kochzonen nach Ausschalten noch heiß sind. Als übliche farbige Anzeigen werden Leuchtdioden eingesetzt. Diese farbigen Anzeigen sind insbesondere für Induktionskochflächen von großer Bedeutung. Im Unterschied zu den strahlungsbeheizten Kochflächen bei denen die erhitzte Kochzone durch ihre rot glühende Farbe erkennbar ist sind bei Induktionskochflächen die Kochzonen auch im Betrieb bei Erhitzung schwarz und visuell unverändert. Daher ist es wünschenswert, den Betriebszustand und die Restwärme durch besondere Farben oder Displayfunktionen kenntlich zu machen.

Aufgrund der Einfärbung und der damit einhergehenden Transmissionskurven besitzen übliche Glaskeramik-Kochflächen eine begrenzte Auswahl möglicher farbiger LED-Anzeigen. Standardmäßig sind die einsetzbaren Anzeigen rot oder gegebenenfalls orange, andere Anzeigen wie insbesondere blaue oder weiße sind bisher kaum zu realisieren. Die üblichen roten Leuchtdioden strahlen bei Wellenlängen um 630 nm und die Transmission der Glaskeramik-Kochflächen ist bei dieser Welle auf etwa 2 bis 12 % eingestellt.
Speziell für den Einsatz von verfügbaren blauen LED wäre es wünschenswert im Bereich 380 bis 500 nm bei mindestens einer Wellenlänge eine Transmission von größer als 0,4 % zu erreichen.
Die verbesserte farbige Anzeigefähigkeit ermöglicht es den Herstellern von Kochgeräten ihre Produkte mit einer Glaskeramik-Kochfläche über das Design zu differenzieren. Durch die Art und Gestaltung der farbigen Anzeigen unter der Glaskeramikplatte kann ein hersteller- oder markentypisches Design erfolgen. Das Design über Licht mit den neuen Optionen, das dann aufgrund der Transmissionscharakteristik der Glaskeramik möglich ist, kann im Markt unverwechselbare Akzente für die Marke setzen.

Die Glaskeramik-Kochfläche selbst soll in Aufsicht schwarz erscheinen und über ein ästhetisches Erscheinungsbild verfügen. Um die störende Durchsicht auf die technischen Bauelemente unter der Glaskeramik-Kochfläche zu verhindern und um die Blendwirkung durch strahlende Heizkörper, insbesondere helle Halogen-Heizkörper zu vermeiden, sind die Glaskeramik-Kochflächen in ihrer Lichttransmission begrenzt. Daher darf die Lichttransmission für das menschliche Auge nicht höher als etwa 2,5 % betragen, weil sonst die ästhetische schwarze Ansicht verloren geht und die technischen Einbauten unter der Glaskeramikplatte bei üblichen Lichtverhältnissen sichtbar werden. Um den Anforderungen an die Anzeigefähigkeit zu genügen beträgt die Lichttransmission mindestens 0,5 %.
Die Transmissionswerte gelten unabhängig von der jeweiligen Dicke der Glaskeramikplatte da sie für die Funktion der Kochfläche entscheidend sind. Glaskeramiken mit Hochquarz-Mischkristallen als vorherrschender Kristallphase werden aus kristallisierbaren Lithiumaluminiumsilikat-Gläsern hergestellt.

Die großtechnische Herstellung dieser Glaskeramiken erfolgt in mehreren Stufen. Zunächst wird das kristallisierbare Ausgangsglas aus einem Gemisch aus Scherben und pulverförmigen Gemengerohstoffen bei Temperaturen üblicherweise zwischen 1500 und 1650°C erschmolzen. Bei der Schmelze wird typischerweise Arsen- und/oder Antimonoxid als Läutermittel eingesetzt. Diese Läutermittel sind verträglich mit den geforderten Glaskeramikeigenschaften und führen zu guten Blasenqualitäten der Schmelze. Auch wenn diese Stoffe fest im Glasgerüst eingebunden sind, so sind sie doch unter Sicherheits- und Umweltschutzaspekten nachteilig. So müssen bei der Rohstoffgewinnung, - aufbereitung und wegen des Verdampfens aus der Schmelze besondere Vorsichtsmaßnahmen ergriffen werden.

Nach dem Einschmelzen und Läutern erfährt das Glas üblicherweise eine Heißformgebung durch Walzen oder neuerdings auch Floaten um Platten herzustellen. Für eine wirtschaftliche Herstellung ist eine niedrige Schmelztemperatur und eine niedrige Verarbeitungstemperatur V_{A} gewünscht. Weiterhin darf das Glas bei der Formgebung keine Entglasung zeigen. Das heißt, bei der Formgebung dürfen sich keine störenden Kristalle bilden, die in den Ausgangsgläsern und den daraus hergestellten Glaskeramiken die Festigkeit beeinträchtigen. Da die Formgebung in der Nähe der Verarbeitungstemperatur V_{A} (Viskosität 10⁴ dPas) des Glases stattfindet, muss gewährleistet sein, dass die obere Entglasungstemperatur der Schmelze unter der Verarbeitungstemperatur liegt, um die Bildung störender Kristalle zu vermeiden. In einem anschließenden Temperaturprozess wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 und 810°C Keime, üblicherweise aus ZrO₂/TiO₂-Mischkristallen, erzeugt werden. Auch SnO₂ kann an der Keimbildung beteiligt sein. Bei anschließender Temperaturerhöhung wachsen die Hochquarz-Mischkristalle auf diesen Keimen auf. Hohe Kristallwachstumsgeschwindigkeiten wie sie für eine wirtschaftliche schnelle Keramisierung gewünscht sind, werden bei Temperaturen von 820 bis 970°C erreicht. Bei dieser maximalen Herstelltemperatur wird das Gefüge der Glaskeramik homogenisiert und die optischen, physikalischen und chemischen Eigenschaften eingestellt. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einem Temperaturbereich von ca. 970 bis 1250°C. Glaskeramiken mit Keatit-Mischkristallen verfügen über höhere Werte der thermischen Ausdehnung.
Mit der Umwandlung ist auch ein Kristallwachstum auf mittlere Kristallitgrößen von 100 nm und darüber sowie eine damit einhergehende Lichtstreuung verbunden. Glaskeramiken mit Keatit-Mischkristallen als Hauptkristallphase sind daher nicht mehr transparent sondern transluzent oder opak. Bei Anwendung als Kochfläche wirkt sich die Lichtstreuung negativ auf die Anzeigefähigkeit aus, da die Anzeigen unter der Glaskeramikplatte nicht mehr klar erkennbar sind und sich ein störender Lichthof bildet.

Für die Herstellung umweltfreundlicher Glaskeramik-Kochflächen wird neuerdings insbesondere der Einsatz von SnO₂ als unbedenkliches Läutermittel beschrieben. Um gute Blasenqualitäten zu erreichen, werden bei konventionellen Schmelztemperaturen (maximal ca. 1680°C) neben SnO₂ bevorzugt HalogenidVerbindungen als zusätzliche Läutermittel eingesetzt. So wird in den japanischen Anmeldungen JP 11 100 229 A und JP 11 100 230 A der Einsatz von 0,1-2 Gew. % SnO₂ und 0 -1 Gew. % Cl beschrieben. Nach diesen Schriften wird die Einfärbung durch Zusatz von V₂O₅ als alleiniges Färbemittel erreicht.

Damit werden hohe Transmissionswerte im Infraroten erreicht, weil das V₂O₅ die besondere Eigenschaft besitzt im Bereich des sichtbaren Lichtes zu absorbieren und im Infraroten durchlässig zu sein. Dies ist für strahlungsbeheizte Kochflächen wesentlich, besitzt aber die beschriebenen Nachteile bei der Wärmeabschirmung für induktions- und gasbeheizte Kochflächen.

Der Einsatz von SnO₂ in Verbindung mit Hochtemperaturläuterung oberhalb 1700°C zur Erreichung guter Blasenqualitäten wird in der DE 199 39 787 C2 beschrieben. Diese Schrift liefert aber keinen Hinweis auf das Erreichen einer guten Wärmeabschirmung. Wesentliches Merkmal der Schrift ist eine Infrarottransmission von größer als 65 % bei 1600 nm wie sie für strahlungsbeheizte Kochflächen wesentlich ist.

Ein früherer Typ von Glaskeramik-Kochflächen, bekannt unter dem Namen Ceran Color®, hergestellt von der SCHOTT AG, besaß gute farbliche Anzeigefähigkeit im Blauen und Roten. Ceran Color® ist durch Zusätze von NiO, CoO, Fe₂O₃ und MnO gefärbt und durch Sb₂O₃ geläutert. Durch diese Kombination von Farboxiden wird eine Lichttransmission von typischerweise 1,2 % für Kochflächen mit üblicher Dicke von 4 mm eingestellt. Die Transmission im Bereich von 380 nm bis 500 nm beträgt je nach Wellenlänge 0,1 - 2,8 %. Bei einer für rote Leuchtdioden üblichen Wellenlänge von 630 nm beträgt die Transmission ca. 6 %. Die IR-Transmission bei 1600 nm beträgt weniger als 20 %. Die Transmissionskurve von Ceran Color® ist in dem Buch "Low Thermal Expansion Glass Ceramics", Editor Hans Bach, Springer-Verlag Berlin Heidelberg 1995, auf Seite 66 abgebildet (ISBN 3-540-58598-2). Die Zusammensetzung ist in dem Buch "Glass-Ceamic Technology", Wolfram Höland und George Beall, The American Ceramic Society 2002 in Tabelle 2 - 7 aufgeführt. Im Sinne einer umweltfreundlichen Kochfläche ist der Einsatz des Läutermittels Sb₂O₃ nachteilig. Durch die geringe Transmission im Bereich des grünen Lichtes von < 0,1 % bei 580 nm ist neben grünen auch die neutrale Anzeige mit weißen LED nicht gegeben.

In der DE 102008050263 A1 wird eine transparente eingefärbte Kochfläche mit verbesserter farbiger Anzeigefähigkeit offenbart. Auf der Basis dieser Schrift wurde kürzlich ein neuer Typ von Glaskeramik-Kochflächen unter der Marke CERAN Hightrans Eco, hergestellt von der SCHOTT AG, in den Markt eingeführt. Die Kochfläche besteht aus einer Glaskeramik mit Hochquarz-Mischkristallen als vorherrschender Kristallphase und enthält bis auf unvermeidliche Spuren keines der chemischen Läutermittel Arsenoxid und/oder Antimonoxid. Die verbesserte farbige Anzeigefähigkeit ist gekennzeichnet durch Transmissionswerte von größer als 0,1 % im Bereich des sichtbaren Lichtes, im gesamten Wellenlängenbereich größer als 450 nm, eine Lichttransmission im Sichtbaren von 0,8 bis 2,5 % und eine Transmission im Infraroten bei 1600 nm von 45 bis 85 %. Durch die hohe Transmission im Infraroten ist diese Glaskeramik für strahlungsbeheizte Kochflächen hervorragend geeignet. Für die Anwendung als induktions- oder gasbeheizte Kochfläche ist die hohe Infrarot-Transmission jedoch von Nachteil. Für die Entwicklung von Glaskeramikplatten die speziell auf die Anwendung als induktions- oder gasbeheizte Kochfläche eingesetzt werden sollen ist es daher wünschenswert die Infrarot-Transmission auf Werte unter 45 % und bevorzugt unter 40% abzusenken um die Wärmeabschirmung zu verbessern.

Die EP 1465460 A2 offenbart eine Glaskeramik-Kochfläche, die im CIE-Farbsystem gemessen, mit Normlicht C einen Y-Wert (brightness) von 2,5 - 15 besitzt, bei einer Dicke von 3 mm. Die Bezeichnungen "brightness" und Lichttransmission entsprechen dergleichen Messgröße. Der Y-Wert ist identisch mit dem Wert der Lichttransmission, gemessen nach DIN 5033. Mit dieser Lichttransmission werden verbesserte Anzeigen für blaue und grüne Leuchtdioden erreicht. Die offenbarten Zusammensetzungen sind mit As₂O₃ und/oder Sb₂O₃, teilweise in Kombination mit SnO₂ geläutert. Die Einfärbung wird durch V₂O₅ vorgenommen. In dem Vergleichsbeispiel wird aufgezeigt, dass bei einer Lichttransmission von 1,9 % die Anzeigefähigkeit für blaue und grüne Leuchtdioden mit den aufgeführten Materialzusammensetzungen unzureichend ist. Die beanspruchten hohen Werte der Lichttransmission von mindestens 2,5 % und bevorzugt höher sind jedoch nachteilig, hinsichtlich der Abdeckung der elektronischen Bauteile unterhalb der Kochfläche. Außerdem wird das ästhetische schwarze Erscheinungsbild der Kochfläche in Aufsicht beeinträchtigt.

US 2005/252503 A1 beschreibt transluzente oder opake Kochflächen mit in Aufsicht unterschiedlichen Farbtönen.

EP 2 226 303 A2 beschreibt ein Verfahren zum Schmelzen und Läutern einer Glasschmelze für ein Ausgangsglas einer LAS-Glaskeramik.

WO 2010/137000 A2 und WO 2011/089220 A1 beschreiben transparente eingefärbte Glaskeramiken mit unterschiedlichen Transmissionscharakteristiken.

Es ist Aufgabe der Erfindung, Kochflächen für Induktionsbeheizung mit verbesserter farbiger Anzeigefähigkeit und Wärmeabschirmung, sowie ein Verfahren zu ihrer Herstellung bereitzustellen, wobei die Kochflächen aus einer Glaskeramik mit Hochquarz-Mischkristallen als vorherrschender Kristallphase bestehen, bis auf unvermeidliche Spuren keines der chemischen Läutermittel Arsenoxid und/oder Antimonoxid enthalten und sich für eine wirtschaftliche und umweltfreundliche Herstellung eignen. Für die wirtschaftliche Herstellung sollen die Ausgangsgläser gut schmelzbar und läuterbar sein, über eine hohe Entglasungsstabilität verfügen und in kurzen Zeiten keramisierbar sein. Die erfindungsgemäßen Kochflächen sollen allen weiteren Anforderungen genügen, die an Kochflächen gestellt werden wie z.B.: chemische Beständigkeit, Temperaturbelastbarkeit und hohe Temperatur/Zeitbelastbarkeit hinsichtlich Änderungen ihrer Eigenschaften (wie z.B. thermische Ausdehnung, Transmission, Aufbau von Spannungen).

Diese Aufgaben werden durch eine Kochfläche gemäß Anspruch 1 und durch ein Verfahren gemäß Anspruch 3 gelöst.

Die Kochflächen verfügen über Transmissionswerte von größer als 0,4 % bei mindestens einer Wellenlänge im Blauen zwischen 380 und 500 nm, eine Transmission von > 2 % bei 630 nm, eine Transmission von kleiner als 45 % bei 1600 nm und eine Lichttransmission im Sichtbaren von kleiner als 2,5 %.

Die Transmission von größer als 0,4 % bei mindestens einer Wellenlänge im Blauen zwischen 380 und 500 nm ermöglicht eine gute Anzeigefähigkeit mit verfügbaren blauen Anzeigen. Da diese meist aus Leuchtdioden bestehenden Anzeigen bei einer bestimmten Wellenlängen mit einer typischen Breite von 15 nm strahlen, reicht es aus, wenn die Transmission von größer als 0,4 % auf diese Wellenlänge abgestimmt wird. Solche Wellenlängen für die Strahlung standardmäßiger blauer LED-Anzeigen sind beispielsweise bei 430 und 470 nm. Die Abstimmung der Transmission der Glaskeramik auf die Wellenlängen bei der die eingesetzten blauen LED strahlen hat auch den Vorteil ,dass die Lichttransmissoin der Kochfläche nicht zu sehr erhöht wird. Bei einer gleichmäßigen Anhebung der Transmission im Wellenlängenbereich von 380 bis 500 nm wird man sonst sehr schnell die erfindungsgemäße Lichttransmission von bis zu 2,5 % verlassen. Durch die Kombination mehrerer Farboxide lässt sich der Transmissionsverlauf speziell für diskrete Wellenlängenbereiche erhöhen. Das bedeutet, dass eine Erhöhung der Anzeigefähigkeit in einer signifikanteren Größenordnung stattfindet, als sie mit einer Reduzierung der Materialdicke erreicht werden kann. Dies ist im Hinblick auf eine verbesserte Anzeigefähigkeit auch für zukünftige energieeffizientere (leistungsschwächere) Displays von hoher Relevanz. Bereits heute ist zu erkennen, dass die derart realisierten wellenlängenselektiven Erhöhungen der Transmission das Potential bieten, auch bei geringerer Leistung der LED-Anzeigen bzw. Displays die Anzeigefähigkeit zu verbessern.
Im Bereich des ultravioletten Lichtes von kleiner als 350 nm besitzt die Kochfläche die niedrigen Transmissionswerte von weniger als 0,01 % wie sie für Glaskeramik-Kochflächen Standard sind. Die Blockierung des UV-Lichtes ist vorteilhaft zum Schutz der organischen Komponenten, wie z. B. Kleber in den technischen Einbauten unter der Kochfläche, sowie als Schutz beim Kochen, falls blaue LED-Anzeigen mit Ultraviolett-Strahlungsanteil zur Anzeige eingesetzt werden.

Durch die erfindungsgemäße Lichttransmission von kleiner als 2,5 % ist sichergestellt, dass die störende Durchsicht auf die technischen Bauelemente unter der Glaskeramik-Kochfläche verhindert wird und das ästhetische schwarze Erscheinungsbild in Aufsicht gewährleistet ist. Durch die Transmission von > 2 % bei 630 nm sind übliche rote Leuchtdioden-Anzeigen gut erkennbar.
Durch die eingestellte Infrarot-Transmission von kleiner als 45 %, gemessen bei 1600 nm, werden die Forderungen an verbesserte Wärmeabschirmung erreicht. Bei induktions- oder gasbeheizte Glaskeramik- Kochflächen werden damit die elektrischen und elektronische Einbauten unter der Glaskeramikplatte besser gegen die Wärmeabstrahlung des heißen Topfbodens geschützt. Dies ist besonders bei Betriebszuständen mit übermäßiger Erhitzung des Topfbodens von Bedeutung. Damit wird auch der Aufwand für den Schutz der Einbauten durch thermisch isolierende Materialien vermindert, indem die Glaskeramikplatte selbst mit einer höheren Wärmeabschirmung versehen wird.
Bevorzugt wird die Infrarot-Transmission auf Werte von kleiner als 40% abgesenkt weil sich die Wärmeabschirmung weiter verbessert.

Da die erfindungsgemäßen Werte der Transmission und Lichttransmission für die Funktion der Kochfläche maßgeblich sind, gelten sie unabhängig von der Dicke der Glaskeramikplatte, die zwischen 2,5 und 6 mm beträgt. Kleinere Dicken sind nachteilig hinsichtlich der Festigkeit und größere Dicken sind unwirtschaftlich, weil sie mehr Material erfordern und die Keramisierungsgeschwindigkeit herabsetzen. Meist liegt die Dicke der Kochfläche bei etwa 4 mm. Da die Dicke und die Konzentration der Färbemittel gleichberechtigt als Faktoren in die Extinktion eingehen, wird der Fachmann problemlos die geforderte Transmission der Kochfläche über die Konzentration der Färbemittel auf die jeweilige Dicke einstellen. Wenn die Kochfläche über Formgebung mit Walzen hergestellt wird, ist die Unterseite meist mit Noppen versehen, um sie vor festigkeitserniedrigenden Verletzungen bei der Herstellung zu schützen. Oft wird die Kochflächen-Unterseite im Bereich der farbige Anzeigen mit transparentem organischen Polymer geglättet, um eine optische Verzerrung durch die Noppen zu vermeiden. Bei Kochflächen mit glatter Unterseite ohne Noppen sind farbige Anzeigen unverzerrt und heller wahrnehmbar.

Die erfindungsgemäßen Kochflächen besitzen eine Zusammensetzung ohne die Läutermittel Arsen- und Antimonoxid und sind damit technisch frei von diesen unter Sicherheits- und Umweltschutzaspekten nachteiligen Komponenten. Als Verunreinigung der Rohstoffe liegen diese Komponenten üblicherweise in Gehalten von weniger als 0,05 Gew.% vor.

Um die Forderungen an die Temperaturunterschiedsfestigkeit für induktiv oder gasbeheizte Kochflächen von bis zu 600 °C sicherzustellen verfügen die erfindungsgemäßen Glaskeramik-Kochflächen über
Wärmeausdehnungskoeffizienten von bis zu (0 ± 2) • 10⁻⁶/K.

Das erfindungsgemäße Verfahren zur Herstellung einer Kochfläche für Induktionsbeheizung mit verbesserter farbiger Anzeigefähigkeit und Wärmeabschirmung zeichnet sich dadurch aus, dass es eine transparente, eingefärbte Glaskeramik mit Hochquarz-Mischkristall als vorherrschender Kristallphase ausbildet und dass bis auf unvermeidliche Spuren, auf die chemischen Läutermittel Arsen- und/oder Antimonoxid verzichtet wird und die Kochfläche auf Transmissionswerte von größer als 0,4 % bei mindestens einer Wellenlänge im Blauen zwischen 380 und 500 nm, eine Lichttransmission im Sichtbaren von kleiner als 2,5 %, eine Transmission von > 2 % bei 630 nm und eine Transmission im Infraroten bei 1600 nm von kleiner 45 %, bevorzugt kleiner als 40% eingestellt wird.

Die Transmission der Kochfläche ist auf Werte von größer als 0,1 % im Bereich des sichtbaren Lichtes im gesamten Wellenlängenbereich größer als 500 nm, eine Transmission von > 2 bis kleiner als 12 % bei 630 nm, eine Transmission im nahen Infrarot bei 950 nm von größer als 30 % und eine Lichttransmission im Sichtbaren von 0,5 - 2 % eingestellt.

Bei diesen Werten ist die farbliche Anzeigefähigkeit weiter verbessert und die unterschiedlichen Forderungen an den Transmissionsverlauf werden weiter optimiert. Durch die Transmission von größer als 0,1 % im Bereich des sichtbaren Lichtes im gesamten Wellenlängenbereich von größer als 500 nm sind neben den blauen auch andersfarbige Anzeigen wie grüne, gelbe oder orange gut erkennbar. Anzeigen mit weißem Licht werden durch diesen Transmissionsverlauf farblich weniger verfälscht. Durch die Begrenzung der Transmission bei 630 nm auf Werte von kleiner als 12 % wird vermieden, dass die roten LED-Anzeigen verändert, das heißt zu hell erscheinen. Die Transmission im nahen Infrarot bei 950 nm von größer als 30 % stellt sicher, dass die üblichen auf optischer Basis funktionierenden Bedienungssensoren einsetzbar sind. Eine weiter verbesserte Abdeckung der technischen Einbauten unterhalb der Kochflächen-Glaskeramik und eine besonders ästhetisches schwarzes Aussehen in Auflicht wird erreicht, wenn die Lichttransmission weniger als 2 % beträgt. Weiter verbessert sich die Anzeigefähigkeit, wenn die Lichttransmission der Kochfläche mindestens 0,5 % beträgt.

Die erfindungsgemäße Kochfläche enthält als Hauptbestandteile der Glaskeramikzusammensetzung die Komponenten (in Gew. % auf Oxidbasis):

| | |
|---|---|
| Li₂O | 1,5 - 4,2 |
| ∑ Na₂O+K₂O | 0,2 - 1,5 |
| MgO | 0 - 3 |
| ∑ CaO+SrO+BaO | 0 - 4 |
| ZnO | 0 - 3 |
| B₂O₃ | 0 - 2 |
| Al₂O₃ | 19 - 23 |
| SiO₂ | 60 - 69 |
| TiO₂ | 1,5-6 |
| ZrO₂ | 0,5 - 2 |
| P₂O₅ | 0 - 3 |
| SnO₂ | 0,1 - < 0,6 |
| ∑ TiO₂+ZrO₂+SnO₂ | 3,8 - 6 |

und Fe₂O₃ 0,03-0,3 in Kombination mit CoO 0,05-0,3, NiO 0,05-0,3, Manganverbindungen > 0 - 2, V₂O₅ 0-0,06 und Cr₂O₃ 0-0,03.

Die Oxide Li₂O, Al₂O₃ und SiO₂ in den angegebenen Grenzen sind notwendige Bestandteile der Hochquarz-Mischkristalle. Ein Mindestgehalt an Li₂O von 1,5 Gew. % ist für eine gut kontrollierbare Kristallisation erforderlich. Höhere Gehalte von über 4,2 Gew. % führen im Herstellprozess häufig zu einer ungewollten Entglasung.

Um höhere Viskositäten des Ausgangsglases und die unerwünschte Entglasung von Mullit bei der Formgebung zu vermeiden ist der Al₂O₃-Gehalt auf bevorzugt maximal 23 Gew. % begrenzt. Der SiO₂-Gehalt soll maximal 69 Gew. % betragen, weil diese Komponente die Viskosität des Glases stark erhöht. Für gutes Einschmelzen der Gläser und für niedrige Formgebungstemperaturen sind höhere Gehalte von Al₂O₃ und SiO₂ unwirtschaftlich. Der Mindestgehalt an SiO₂ soll 60 Gew. % betragen, weil dies für die geforderten Kochflächeneigenschaften, wie z.B. chemische Beständigkeit und Temperaturbelastbarkeit vorteilhaft ist.

Als weitere Komponenten können MgO, ZnO und P₂O₅ in die Hochquarz-Mischkristalle eingebaut werden. Der ZnO-Gehalt ist wegen der Problematik der Bildung unerwünschter Kristallphasen wie Zink-Spinell (Gahnit) bei der Keramisierung auf Werte von höchstens 3 Gew. % begrenzt. Der MgO-Gehalt ist auf maximal 3 Gew. % begrenzt, weil er sonst den Ausdehnungskoeffizienten der Glaskeramik unzulässig erhöht. Die Zugabe von P₂O₅ ist günstig für das Einschmelzen und die Formgebung des Ausgangsglases.

Die Zugabe der Alkalien Na₂O, K₂O und der Erdalkalien CaO, SrO, BaO sowie von B₂O₃ verbessern die Schmelzbarkeit und die Entglasungsstabilität bei der Formgebung des Glases. Die Gehalte müssen jedoch begrenzt werden, weil diese Komponenten nicht in die Kristallphasen eingebaut werden, sondern im wesentlichen in der Restglasphase der Glaskeramik verbleiben. Zu hohe Gehalte beeinträchtigen das Kristallisationsverhalten bei der Umwandlung des kristallisierbaren Ausgangsglases in die Glaskeramik, hier insbesondere zu Lasten schneller Keramisierungsgeschwindigkeiten. Außerdem wirken sich höhere Gehalte ungünstig auf die Zeit-/Temperaturbelastbarkeit der Glaskeramik aus. Die Summe der Alkalien Na₂O + K₂O soll mindestens 0,2 Gew. % und maximal 1,5 Gew. % betragen.
Die Summe der Erdalkalien CaO + SrO + BaO soll maximal 4 Gew. % betragen. Die genannten Alkalien und Erdalkalien reichern sich außer in der Restglasphase zwischen den Kristallen auch an der Oberfläche der Glaskeramik an. Beim Keramisieren bildet sich eine ca. 200 bis 1000 nm dicke glasige Oberflächenschicht, die nahezu frei ist von Kristallen und die an diesen Elementen angereichert und an Lithium abgereichert ist. Diese glasige Oberflächenschicht wirkt sich günstig auf die chemische Beständigkeit der Glaskeramik aus.

Die Mindestmenge der Keimbildner TiO₂, ZrO₂ und SnO₂ beträgt 3,8 Gew. %. Bei der Keramisierung bilden sie während der Keimbildung Kristallkeime in hoher Dichte, die für das Aufwachsen der Hochquarz-Mischkristalle bei der Kristallisation als Unterlage dienen. Die hohe Keimdichte führt zu einer hohen Kristalldichte mit mittleren Kristallitgrößen von weniger als 100 nm, was eine für die Anzeigen störende Lichtstreuung vermeidet. Die Keimbildnergehalte sind mit der Keimbildungsrate korreliert und damit für kürzere Keramisierungszeiten von Bedeutung. Höhere Gehalte als in der Summe 6 Gew. % verschlechtern die Entglasungsstabilität. Für verbesserte Entglasungsstabilität ist der SnO₂ Gehalt auf weniger als 0,6 Gew. % begrenzt. Höhere Gehalte führen zur Kristallisation von Sn-haltigen Kristallphasen an den Kontaktmaterialien (z.B. Pt/Rh) bei der Formgebung und sind unbedingt zu vermeiden. Der ZrO₂-Gehalt ist auf
2 Gew. % begrenzt, da höhere Gehalte das Einschmelzverhalten des Gemenges bei der Glasherstellung verschlechtern und die Entglasungsstabilität bei der Formgebung durch Bildung von ZrO₂- haltigen Kristallen beeinträchtigt werden kann. Der Mindestgehalt an ZrO₂ soll 0,5 Gew. % betragen, um eine hohe Keramisierungsgeschwindigkeit zu begünstigen. Der TiO₂-Gehalt liegt zwischen 1,5 und 6 Gew. %. Die Mindestmenge soll nicht unterschritten werden, damit hohe Keimbildungsraten für das Erzielen hoher
Keramisierungsgeschwindigkeiten sichergestellt sind. Der Gehalt soll 6 Gew. % nicht übersteigen, weil sonst die Entglasungsstabilität verschlechtert wird.

Für das Einstellen der erfindungsgemäßen Transmission mit verbesserter farbiger Anzeigefähigkeit und Wärmeabschirmung ist eine Kombination von mindestens zwei Farboxiden erforderlich. Fe₂O₃-Gehalte von 0,03 bis 0,3

Gew. % sind kombiniert mit Farboxiden aus der Gruppe V₂O₅, CoO, Cr₂O₃, und NiO. Neben dem Farboxid Fe₂O₃ enthält die Glaskeramik NiO und CoO in Mindestgehalten von 0,05 Gew. % um die Infrarot-Transmission bei 1600 nm auf Werte von kleiner 45 % einzustellen.
Die Kombination der Farboxide gestattet es, mit geringeren Mengen des kostspieligen und als Gefahrstoff eingestuften Färbemittels V₂O₅ auszukommen. Bevorzugt ist der Gehalt der anderen Farboxide mindestens doppelt so hoch wie der des V₂O₅.
Mit den erfindungsgemäßen Farboxid-Gehalten ist es möglich, alle Anforderungen an den Transmissionsverlauf, wie spezifikationsgerechte Lichttransmission, abgesenkte Infrarot-Transmission, sowie Anzeigefähigkeit für standardmäßige rote Leuchtdioden zusammen mit der gewünschten verbesserten Anzeigefähigkeit für blaue und andersfarbige Leuchtanzeigen zu erreichen.

Weitere färbende Komponenten wie z.B. Mangan-, Kupfer-, Selen-, Selten Erd-, Molybdänverbindungen können eingesetzt werden, um die Färbung zu unterstützten und die Transmission im Infraroten abzusenken. Ihr Gehalt ist auf Mengen von maximal etwa 1 Gew. % begrenzt, weil diese Verbindungen in der Regel die Transmission im Blauen verringern. Manganverbindungen sind wegen der schwächeren Färbewirkung in höheren Gehalten bis zu etwa 2 Gew. % enthalten.
Durch Zusatz von 50 - 400 ppm Nd₂O₃ ist es möglich, die Glaskeramik-Kochfläche zu markieren. Die Absorptionsbande des Nd im nahen Infrarot bei 806 nm liegt in einem Bereich hoher Transmissionswerte der Glaskeramik und ist so markant im Transmissionsspektrum. Dadurch kann das Kochflächenmaterial sicher dem Hersteller zugeordnet werden und mit optischen Scherbenerkennungsverfahren ist ein gutes Recycling möglich.

Der Wassergehalt der Ausgangsgläser zur Herstellung der erfindungsgemäßen Kochflächen liegt abhängig von der Wahl der Gemengerohstoffe und der Prozessbedingungen bei der Schmelze üblicherweise zwischen 0,015 und 0,06 mol/l. Dies entspricht β-OH-Werten von 0,16 bis 0,64 mm⁻¹ für die kristallisierbaren Ausgangsgläser.

Für eine wirtschaftliche Herstellung ist gute Schmelzbarkeit und eine schnelle Keramisierbarkeit des Ausgangsglases gewünscht. Dabei ist es notwendig, die Keimbildungs- und Keramisierungsgeschwindigkeit durch eine entsprechend gewählte Zusammensetzung zu erhöhen. Hierbei hat es sich als vorteilhaft erwiesen, die Gehalte der Keimbildner TiO₂ + ZrO₂ + SnO₂ zu erhöhen, um die Keimbildungsgeschwindigkeit anzuheben, während der Gehalt an P₂O₅ zu niedrigeren Werten gewählt werden muss.
Um die Schmelzbarkeit zu verbessern, hat es sich als günstig erwiesen, die Gehalte an SiO₂, ZrO₂ und Al₂O₃ zu verringern und den Anteil der Komponenten, die die Restglasphase der Glaskeramik bilden, wie die Alkalien Na₂O und K₂O sowie die Erdalkalien CaO, SrO, BaO zu erhöhen. Die Obergrenzen der Gehalte von ZnO und MgO werden in bevorzugter Weise erniedrigt um die Entglasungsstabilität bei der Formgebung zu verbessern.
Bevorzugt beträgt der SnO₂ -Gehalt 0,1 bis 0,5 Gew. %. Ein Mindestgehalt von 0,1 Gew. % ist für die Läuterung des Glases erforderlich. Weiter wirkt das SnO₂ als Keimbildner und falls auch V₂O₅ als Färbemittel eingesetzt wird ist es als Reoxpartner erforderlich, damit das Vanadin-Ion beim Keramisieren in die färbende niedrigere Oxidationsstufe reduziert werden kann. Der SnO₂ -Gehalt beträgt maximal 0,5 Gew. % für die verbesserte Entglasungsstabilität bei der Formgebung.

Der Begriff "im wesentlichen besteht aus" bedeutet, dass die aufgeführten Komponenten wenigstens 96 %, in der Regel 98 % der Gesamtzusammensetzung betragen sollen. Eine Vielzahl von Elementen wie z.B. F, Cl, die Alkalien Rb, Cs oder Elemente wie Hf sind bei den großtechnisch verwendeten Gemengerohstoffen übliche Verunreinigungen. Andere Verbindungen wie z.B. solche der Elemente Ge, seltene Erden, Bi, W, Nb, Ta, Y können in geringen Anteilen zugesetzt werden.

Um die Blasenqualität zu verbessern, können neben dem eingesetzten SnO₂ zusätzlich weitere Läuterzusätze wie z.B. CeO₂, MnO₂, Sulfat-, Sulfid-, Halogenidverbindungen eingesetzt werden. Deren Gehalte sind üblicherweise auf Mengen bis 2 Gew. % begrenzt. Bei der Herstellung von Kochflächen sind als gute Blasenqualitäten solche mit Blasenzahlen von unter 5, bevorzugt unter 3 Blasen/kg Glas (bezogen auf Blasengrößen größer als 0,1 mm) gewünscht.

Als weiteres wichtiges Ergebnis der Zugabe von Fe₂O₃ wurde gefunden, dass dies die Läuterung wesentlich unterstützt. In Kombination mit dem SnO₂ als Hauptläutermittel gibt auch das Fe₂O₃ Sauerstoff ab und wird dabei zum Fe²⁺ reduziert. Damit sich die Zugabe von Fe₂O₃ als zusätzliches Läutermittel in Kombination mit SnO₂ besonders vorteilhaft auswirkt, sollte der Gehalt in besonders bevorzugter Form mindestens 0,05 Gew. % betragen.

Sowohl SnO₂ als auch Fe₂O₃ sind Hochtemperaturläutermittel und geben den für die Läuterung notwendigen Sauerstoff bei hohen Schmelztemperaturen ab etwa 1650 °C in ausreichenden Mengen ab. Der für die Läuterwirkung maßgebliche Umsatz steigt mit der Temperatur der Schmelze an. Eine Temperaturbehandlung der Schmelze von größer als 1700°C und weiter größer als 1750 °C liefert also hinsichtlich der Blasenqualität weiter verbesserte Ergebnisse. Für verbesserte Blasenzahlen von weniger als 3 Blasen/kg Glas bei wirtschaftlich günstigen höheren Wannendurchsätzen ist eine Hochtemperaturläuterung mit Temperaturen der Glasschmelze von größer als 1700 °C, bevorzugt größer als 1750 °C vorteilhaft.

Unter einer schnellen Keramisierbarkeit wird eine thermische Behandlung zur Kristallisation der Glaskeramik mit einer Dauer von weniger als 2 Stunden, bevorzugt weniger als 80 Minuten verstanden.

Bei dem erfindungsgemäßen Verfahren zur Keramisierung wird das thermisch entspannte kristallisierbare Ausgangsglas innerhalb von 1 - 30 min auf den Temperaturbereich der Transformationstemperatur Tg des Glases von etwa 680°C erhitzt. Die erforderlichen hohen Heizraten können großtechnisch in Rollenöfen realisiert werden. Oberhalb dieser Temperatur bis etwa 810°C ist der Bereich mit hohen Keimbildungsraten. Der Temperaturbereich der Keimbildung wird über einen Zeitraum von 8 bis 30 Minuten durchfahren. Danach wird die Temperatur des Kristallisationskeime enthaltenden Glases innerhalb von 2 bis 30 Minuten auf eine Temperatur von 820 bis 970°C, die sich durch hohe Kristallwachstumsgeschwindigkeiten der Hochquarz-Mischkristallphase auszeichnet, erhöht. Diese maximale Temperatur wird bis zu 30 Minuten gehalten. Dabei wird das Gefüge der Glaskeramik homogenisiert und die optischen, physikalischen und chemischen Eigenschaften eingestellt. Die erhaltene Glaskeramik wird bis 800 °C mit Abkühlraten von ca. 2 bis 40 °C/min und danach rasch auf Raumtemperatur abgekühlt.

Durch Zusatz von Reduktionsmitteln in pulvriger und/oder flüssiger Form zum Ausgangsgemenge kann die Färbewirkung des V₂O₅ verstärkt werden oder blau färbendes Ti³⁺ erzeugt werden. Dafür eignen sich Metalle, Kohlenstoff und/oder aufoxidierbare Kohlenstoff- bzw. Metallverbindungen wie z.B. Al- oder Si-Pulver, Zucker, Holzkohle, SiC, TiC, MgS, ZnS. Auch gasförmige Reduktionsmittel, wie z.B. Formiergas sind geeignet. Die genannten Reduktionsmittel sind geeignet den pO₂ der Schmelze zu senken. Da Vanadiumoxid ein kostspieliger Rohstoff ist, ist es wirtschaftlich vorteilhaft, den Gehalt zu minimieren.

Vorzugsweise sind unter der erfindungsgemäßen Kochfläche mit verbesserter farbiger Anzeigefähigkeit anstelle oder in Ergänzung zu den üblichen roten Anzeigen eine oder mehrere andersfarbige Anzeigen, wie blaue, grüne, gelbe, orange oder weiße angeordnet. Die farbigen Anzeigen bestehen aus Licht emittierenden elektronische Bauteilen, meist aus Leuchtdioden. Es sind alle Formen von Anzeigen, punktuelle wie flächige möglich. Es können auch schwarz-weiße und farbige Displays oder Bildschirme mit deutlich verbesserter Farbtreue dargestellt werden. Neben der Anzeige von Betriebszuständen wird es damit für den Nutzer möglich interaktiv an der Kochfläche tätig zu werden. Es können z. B. Rezepte gelesen, Bilder angesehen werden oder es kann mit dem Intranet kommuniziert werden. Die Steuerung kann über berührungsempfindliche Bildschirme erfolgen. Die Unterseite der Kochfläche kann die üblichen Noppen besitzen oder glatt ausgeführt sein. Die verbesserte Anzeigefähigkeit kommt bei Kochflächen mit glatter Unterseite besonders zur Geltung, da die farbigen Anzeigen unverzerrt und heller wahrnehmbar sind. Die Kochfläche kann Bereiche mit geringerer Dicke für die Anzeigen enthalten. Da die Transmission exponentiell von der Schichtdicke abhängt, wird die Helligkeit der Anzeige, z. B. bei einem Bildschirm, stark erhöht. Die anderen Bereiche der Kochfläche sollen jedoch dicker ausgebildet sein, damit sie über die erfindungsgemäße Lichttransmission verfügen.

Die Kochfläche kann dabei nicht nur als ebene Platte ausgeformt sein, sondern auch dreidimensional verformte wie z.B. abgekantete, gewinkelte oder gewölbte Platten können verwendet werden. Die Platten können rechtwinklig oder in anderen Formen vorliegen, sowie neben ebenen Bereichen dreidimensional verformte Bereiche wie z.B. Stege oder Woks enthalten.

Die vorliegende Erfindung wird mit Hilfe der folgenden Beispiele weiter verdeutlicht.

Für einige Ausführungsbeispiele sind in Tabelle 1 Zusammensetzungen der kristallisierbaren Ausgangsgläser und die Läuterbedingungen aufgeführt. Dabei handelt es sich bei den Gläsern 1 bis 4 um erfindungsgemäße Gläser und bei dem Glas 5 um ein Vergleichsglas das zu einer Glaskeramik außerhalb der vorliegenden Erfindung führt.
Aufgrund von typischen Verunreinigungen in den verwendeten großtechnischen Gemengerohstoffen addieren sich die Zusammensetzungen nicht genau zu 100 Gew. %. Typische Verunreinigungen, auch wenn nicht absichtlich in die Zusammensetzung eingeführt sind F, Cl, B, P, Rb, Cs, Hf, die üblicherweise weniger als 0,1 Gew. % betragen. Sie werden oft über die Rohstoffe für die chemisch verwandten Komponenten eingeschleppt, so z.B. Rb und Cs über die Na-, bzw. K- Rohstoffe, oder Sr über den Ba-Rohstoff und umgekehrt.

Die Ausgangsgläser von Tabelle 1 wurden aus in der Glasindustrie üblichen Rohstoffen bei Temperaturen von ca. 1620°C, 4 Stunden eingeschmolzen. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1550°C, 30 Minuten durch Rühren homogenisiert. Nach dieser Homogenisierung wurden die Gläser für 2 Stunden bei 1640 °C geläutert. Anschließend wurden Stücke der Größe 140 x 80 x 30 mm³ gegossen und zur Vermeidung von Spannungen in einem Kühlofen, beginnend bei einer Temperatur von 660 °C auf Raumtemperatur abgekühlt. Aus den Gussstücken wurden die Prüfmuster für die Messungen präpariert.
Das Glas Nr. 4 mit gleicher Zusammensetzung wie Glas Nr. 3 wurde stattdessen bei 1850 °C, 1h geläutert. Der positive Einfluss der Hochtemperaturläuterung hinsichtlich der Blasenqualität zeigt sich visuell bei dieser Laborschmelze.

Die Keramisierungen der Ausgangsgläser erfolgte mit dem folgenden Temperatur/Zeit-Programm:
a) schnelles Aufheizen von Raumtemperatur auf 680°C innerhalb von etwa 10 min,
b) Temperaturerhöhung von 680 °C auf 730 °C mit einer Heizrate von 10 °C/min, weiteres Aufheizen mit 5,2 °C/min auf 810 °C,
c) Temperaturerhöhung von 810°C auf Maximaltemperatur Tₘₐₓ von 920°C mit einer Heizrate von 6 °C/min, Haltezeit tₘₐₓ von 6 min bei Maximaltemperatur,
d) Abkühlen von Maximaltemperatur auf 800°C mit 5,5 °C/min, dann schnelle Abkühlung auf Raumtemperatur.

In Tabelle 2 sind die Eigenschaften im keramisierten Zustand, wie die thermische Ausdehnung zwischen 20 und 700 °C und die Transmissionswerte für ausgewählte Wellenlängen dargestellt. Die Werte wurden an polierten Platten mit den angegebenen für Kochflächen typischen Dicken bestimmt. Die optischen Messungen erfolgten mit Normlicht C, 2 Grad.

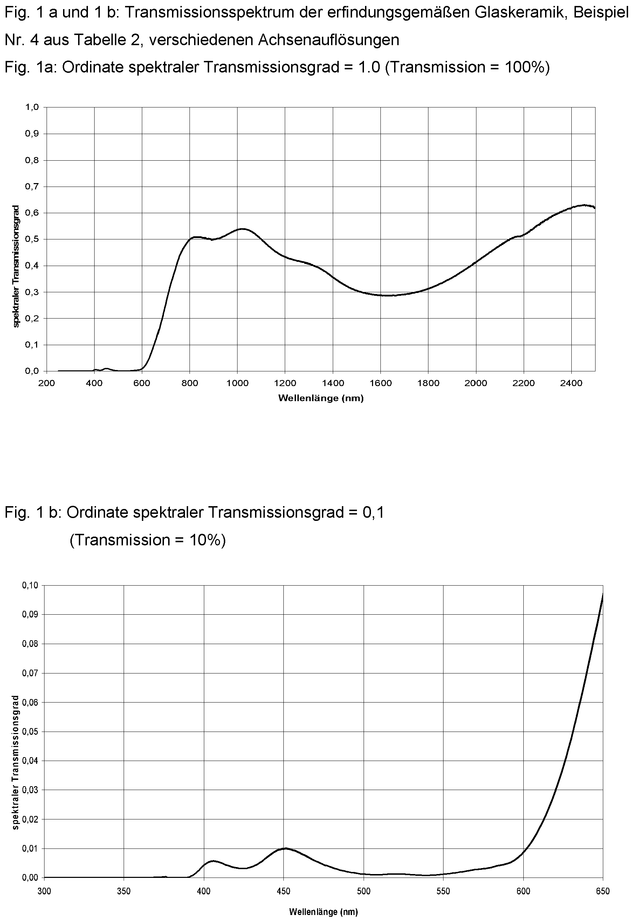

Die Fig. 1a und 1b zeigen Transmissionsspektren der erfindungsgemäßen Glaskeramik nach Beispiel Nr. 4 aus Tabelle 2 in verschiedenen Achsenauflösungen.
Fig. 1a zeigt "Ordinate spektraler Transmissionsgrad = 1.0 (Transmission = 100%),
Fig. 1b zeigt "Ordinate spektraler Transmissionsgrad = 0.1 (Transmission = 10%)".

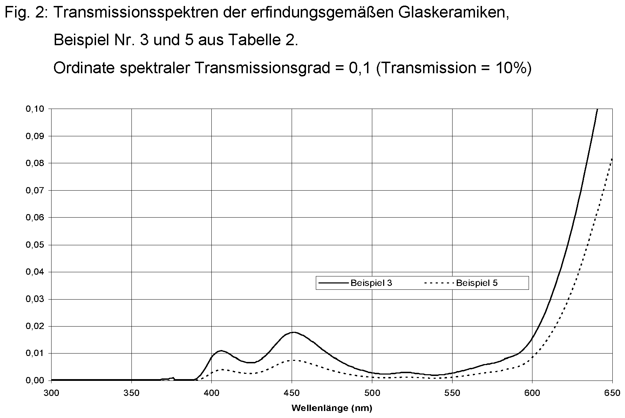

Das Glas Nr. 3 erfüllt die gewünschten Anforderungen an die Anzeigefähigkeit und Wärmeabschirmung für Kochflächen der Dicken 3,5 (Beispiel 3) und 4 mm (Beispiel 4) und zeichnet sich durch eine besonders vorteilhafte Kombination von Farboxiden aus. Durch die Hochtemperaturläuterung des Glases Nr. 4 mit gleicher Zusammensetzung wie Glas Nr. 3 wird die Färbewirkung insbesondere des Vanadiumoxids im Bereich des sichtbaren Lichtes verstärkt. Das zeigt sich durch den direkten Vergleich von Beispiel 5 mit Beispiel 3 da beide die Dicke 3,5 mm besitzen. Die Kurven der Transmissionspektren der erfindungsgemäßen Glaskeramiken Beispiel Nr. 3 und 5 aus Tabelle 2 "Ordinate spektraler Transmissionsgrad = 0.1 (Transmission = 10%)" sind in Fig. 2 dargestellt.

Bei der Vergleichsglaskeramik Beispiel 6 sind die Anforderungen an gute Anzeigefähigkeit und verbesserte Wärmeabschirmung bei den für Kochflächen üblichen Dicken nicht zu erreichen.

Die Beispiele verfügen aufgrund ihres Gehaltes an Hochquarz-Mischkristall als vorherrschender Kristallphase über die gewünschten niedrigen Werte der thermischen Ausdehnung, gemessen im Temperaturbereich zwischen 20 und 700 °C. Die für die Erfindung charakteristischen Werte für die Transmission bei den verschiedenen Wellenlängen, sowie für die Lichttransmission, gleichbedeutend mit "brightness" Y, sind in der Tabelle aufgeführt.

**Tabelle 1: Zusammensetzungen und Läutertemperaturen erfindungsgemäßer kristallisierbarer Ausgangsgläser und Vergleichsglas 5.**

| **Glas Nr.** | | **1** | **2** | **3** | **4** | **5** |
|---|---|---|---|---|---|---|
| | | | | | | |

| Zusammensetzungen in Gew.% auf Oxidbasis | | | | | wie Glas Nr. 3 | |
|---|---|---|---|---|---|---|
| Li₂O | | 3,82 | 3,87 | 3,86 | | 2,98 |
| Na₂O | | 0,59 | 0,59 | 0,57 | | 0,46 |
| K₂O | | 0,26 | 0,26 | 0,26 | | 0,20 |
| MgO | | 0,31 | 0,31 | 0,32 | | 1,47 |
| CaO | | 0,41 | 0,42 | 0,40 | | 0,31 |
| SrO | | - | - | - | | 0,52 |
| BaO | | 2,31 | 2,32 | 2,29 | | 1,86 |
| ZnO | | 1,44 | 1,49 | 1,44 | | 1,55 |
| Al₂O₃ | | 20,4 | 20,6 | 20,6 | | 20,0 |
| SiO₂ | | 64,8 | 65,1 | 65,0 | | 65,3 |
| TiO₂ | | 3,09 | 2,54 | 3,11 | | 4,44 |
| ZrO₂ | | 1,34 | 1,35 | 1,37 | | 0,28 |
| SnO₂ | | 0,25 | 0,25 | 0,25 | | 0,22 |
| P₂O₅ | | - | - | 0,10 | | - |
| MnO₂ | | 0,20 | 0,20 | 0,024 | | - |
| CoO | | 0,21 | 0,21 | 0,089 | | 0,047 |
| Fe₂O₃ | | 0,18 | 0,18 | 0,077 | | 0,095 |
| NiO | | 0,27 | 0,27 | 0,13 | | 0,15 |
| V₂O₅ | | 0,015 | - | 0,018 | | 0,012 |
| | | | | | | |
| **Läutertemperatur, Läuterzeit** | °C h | 1640 2 | 1640 2 | 1640 2 | 1850 1 | 1640 2 |

**Tabelle 2: Eigenschaften erfindungsgemäßer Glaskeramiken, Beispiele 1 bis 5 und Vergleichsglaskeramik, Beispiel 6**

| **Beispiel Nr** | | **1** | **2** | **3** | **4** | **5** | **6** |
|---|---|---|---|---|---|---|---|
| **Glas Nr.** | | **1** | **2** | **3** | **3** | **4** | **5** |
| | | | | | | | |

| Thermische Ausdehnung | | | | | | | |
|---|---|---|---|---|---|---|---|
| α_{20/700} | 10⁻⁶/K | 0,43 | 0,31 | 0,15 | 0,15 | 0,15 | 1,18 |

| Transmission Normlicht C, 2° | | | | | | | |
|---|---|---|---|---|---|---|---|
| Dicke | mm | 2,5 | 3,0 | 3,5 | 4,0 | 3,5 | 2,5 |
| | | | | | | | |
| 400 nm | % | 0,3 | 0,2 | 0,9 | 0,4 | 0,3 | <0,01 |
| 450 nm | % | 1,3 | 3,8 | 1,8 | 1,0 | 0,8 | 0,2 |
| 470 nm | % | 0,9 | 2,1 | 1,1 | 0,6 | 0,5 | 0,4 |
| 500 nm | % | 0,3 | 0,2 | 0,3 | 0,1 | 0,1 | 0,5 |
| 600 nm | % | 0,6 | 0,8 | 1,6 | 0,9 | 0,9 | 1,4 |
| 630 nm | % | 4,5 | 7,8 | 6,9 | 4,8 | 4,2 | 3,3 |
| 700 nm | % | 31,7 | 49,9 | 30,4 | 26,0 | 22,5 | 11,2 |
| 950 nm | % | 45,5 | 40,3 | 55,3 | 51,5 | 53,6 | 50,8 |
| 1600 nm | % | 20,7 | 14,1 | 33,4 | 28,9 | 33,0 | 52,9 |
| Lichttransmission Y | % | 0,9 | 1,3 | 1,3 | 0,8 | 0,8 | 1,1 |
| | | | | | | | |

## Patentansprüche

1. Glaskeramik-Kochfläche für Induktionsbeheizung mit verbesserter farbiger Anzeigefähigkeit und Wärmeabschirmung, bestehend aus einer transparenten, eingefärbten Glaskeramikplatte, deren Dicke zwischen 2,5 mm und 6 mm beträgt, mit Hochquarz-Mischkristallen als vorherrschender Kristallphase, wobei die Glaskeramik, bis auf Verunreinigungen in Gehalten von weniger als 0,05 Gew. %, keines der chemischen Läutermittel Arsenoxid und Antimonoxid enthält,
**gekennzeichnet durch** Transmissionswerte der Kochfläche von:
> 0,4 % bei mindestens einer Wellenlänge im Blauen zwischen 380 und 500 nm,
> 2 % - < 12% bei 630 nm,
< 45 % bei 1600 nm, bevorzugt < 40%
und eine Lichttransmission im Sichtbaren von 0,5 - 2%,
> 0,1% im Bereich des sichtbaren Lichtes im gesamten
Wellenlängenbereich > 500 nm,
im nahen Infrarot bei 950 nm > 30%.
und **dadurch**,
dass die Zusammensetzung der Glaskeramik (in Gew. % auf Oxidbasis) als Hauptbestandteile enthält:
| | |
|---|---|
| Li₂O | 1,5 - 4,2 |
| ∑ Na₂O+K₂O | 0,2 - 1,5 |
| MgO | 0 - 3 |
| ∑ CaO+SrO+BaO | 0 - 4 |
| ZnO | 0 - 3 |
| B₂O₃ | 0 - 2 |
| Al₂O₃ | 19 - 23 |
| SiO₂ | 60 - 69 |
| TiO₂ | 1,5 - 6 |
| ZrO₂ | 0,5 - 2 |
| P₂O₅ | 0 - 3 |
| SnO₂ | 0,1 - < 0,6 |
| ∑ TiO₂+ZrO₂+SnO₂ | 3,8 - 6 |
und Fe₂O₃ 0,03 - 0,3 in Kombination mit
| | |
|---|---|
| CoO | 0,05 - 0,3 |
| NiO | 0,05 - 0,3 |
| Manganverbindungen | > 0 - 2 |
| V₂O₅ | 0 - 0,06 |
| Cr₂O₃ | 0 - 0,3 |

2. Glaskeramik-Kochfläche für Induktionsbeheizung nach Anspruch 1, **dadurch gekennzeichnet,**
**dass** die Glaskeramik durch eine Temperatur der Glasschmelze von größer als 1700°C, bevorzugt größer als 1750°C eine Blasenzahl von weniger als 3 Blasen/kg aufweist.

3. Verfahren zur Herstellung einer Glaskeramik-Kochfläche für Induktionsbeheizung mit schneller Keramisierung des kristallisierbaren Ausgangsglases nach den Ansprüchen 1 oder 2 mit einer Gesamtdauer von weniger als 2 Stunden, bevorzugt weniger als 80 Minuten, **dadurch gekennzeichnet,**
**dass** die Keramisierung mit folgendem Programm vorgenommen wird:
a) Erhöhen der Temperatur des kristallisierbaren Glases auf den Temperaturbereich von 680°C innerhalb von 1 - 30 Minuten;
b) Erhöhen der Temperatur des kristallisierbaren Glases innerhalb des Temperaturbereichs der Keimbildung von 680 bis 810°C über einen Zeitraum von 8 bis 30 Minuten;
c) Erhöhen der Temperatur des Kristallisationskeime enthaltenden Glases innerhalb von 2 bis 30 Minuten Dauer in den Temperaturbereich hoher Kristallwachstumsgeschwindigkeit von 820 bis 970°C;
d) Halten innerhalb des Temperaturbereiches bei der maximalen Temperatur von 820 bis 970°C bis zu 30 Minuten um Kristalle des Typs Hochquarz-Mischkristalle auf den Kristallisationskeimen wachsen zu lassen und danach;
e) rasches Abkühlen der erhaltenen Glaskeramik auf Raumtemperatur.

4. Verfahren zur Herstellung einer Glaskeramik-Kochfläche für Induktionsbeheizung nach Anspruch 3,
**dadurch gekennzeichnet,**
**dass** durch eine Temperatur der Glasschmelze von größer als 1700°C, bevorzugt größer als 1750°C eine Blasenzahl von weniger als 3 Blasen/kg Glas erreicht wird.

## Claims

1. Glass-ceramic cooking surface for induction heating having improved coloured display capability and heat shielding, consisting of a transparent, coloured glass-ceramic plate which has a thickness in the range from 2.5 mm to 6 mm and has high-quartz mixed crystals as predominant crystal phase, where the glass-ceramic contains none of the chemical refining agents arsenic oxide and antimony oxide except for unavoidable traces in an amount of less than 0.05%,
**characterized by** transmission values of the cooking surface of:
> 0.4% at at least one wavelength in the blue range from 380 to 500 nm,
> 2% - < 12% at 630 nm,
< 45% at 1600 nm, preferably < 40%,
and a light transmission in the visible range of 0.5-2%,
> 0.1% in the range of visible light in the total wavelength range > 500 nm,
in the near infrared at 950 nm > 30%,
and in that
the composition of the glass-ceramic (in percent by weight on an oxide basis) contains, as main constituents:
| | |
|---|---|
| Li₂O | 1.5 - 4.2 |
| ∑ Na₂O+K₂O | 0.2 - 1.5 |
| MgO | 0 - 3 |
| ∑ CaO+SrO+BaO | 0 - 4 |
| ZnO | 0 - 3 |
| B₂O₃ | 0 - 2 |
| Al₂O₃ | 19 - 23 |
| SiO₂ | 60 - 69 |
| TiO₂ | 1.5 - 6 |
| ZrO₂ | 0.5 - 2 |
| P₂O₅ | 0 - 3 |
| SnO₂ | 0.1 - < 0.6 |
| ∑ TiO₂+ZrO₂+SnO₂ | 3.8 - 6 |
and Fe₂O₃ 0.03 - 0.3 in combination with
| | |
|---|---|
| CoO | 0.05 - 0.3 |
| NiO | 0.05 - 0.3 |
| Manganese compounds | > 0 - 2 |
| V₂O₅ | 0 - 0.06 |
| Cr₂O₃ | 0 - 0.3. |

2. Glass-ceramic cooking surface for induction heating according to Claim 1,
**characterized in that**
the glass-ceramic has a bubble count of less than 3 bubbles/kg as a result of a temperature of the glass melt of greater than 1700°C, preferably greater than 1750°C.

3. Process for producing a glass-ceramic cooking surface for induction heating with fast ceramicization of the crystallizable starting glass according to Claim 1 or 2 over a total time of less than 2 hours, preferably less than 80 minutes,
**characterized in that**
the ceramicization is carried out using the following program:
a) increasing the temperature of the crystallizable glass to the temperature range of about 680°C within a period of 1-30 minutes;
b) increasing the temperature of the crystallizable glass within the temperature range of nucleation from 680 to 810°C over a period of from 8 to 30 minutes;
c) increasing the temperature of the glass containing crystallization nuclei within a period of from 2 to 30 minutes to the temperature range of a high crystal growth rate from 820 to 970°C;
d) holding within the temperature range at the maximum temperature of from 820 to 970°C for up to 30 minutes in order to allow crystals of the type high-quartz mixed crystals to grow on the crystallization nuclei and then
e) rapid cooling of the glass-ceramic obtained to room temperature.

4. Process for producing a glass-ceramic cooking surface for induction heating according to Claim 3, **characterized in that**
a bubble count of less than 3 bubbles/kg of glass is achieved as a result of a temperature of the glass melt of greater than 1700°C, preferably greater than 1750°C.

## Revendications

1. Surface de cuisson en vitrocéramique pour chauffage par induction dotée d'une capacité d'affichage en couleur et d'une protection thermique améliorées, constituée d'une plaque de vitrocéramique transparente, teintée, dont l'épaisseur est comprise entre 2,5 mm et 6 mm, comportant des cristaux mixtes de quartz bêta en tant que phase cristalline prédominante, la vitrocéramique ne contenant, mis à part des impuretés en des teneurs inférieures à 0,05 % en poids, aucun des agents d'affinage chimiques oxyde d'arsenic et oxyde d'antimoine,
**caractérisée par** des valeurs de transmission de la surface de cuisson de :
> 0,4 % à au moins une longueur d'onde dans le bleu comprise entre 380 et 500 nm,
> 2 % à < 12 % à 630 nm,
< 45 % à 1 600 nm, préférablement < 40 % et une transmission de lumière dans le visible de 0,5 à 2 %,
> 0,1 % dans le domaine de la lumière visible dans le domaine de longueur d'onde entier > 500 nm,
dans l'infrarouge proche à 950 nm > 30 %,
et en ce que,
la composition de la vitrocéramique (en % en poids sur une base d'oxyde) contient en tant qu'ingrédients principaux :
| | |
|---|---|
| Li₂O | 1,5 à 4,2 |
| ∑ Na₂O + K₂O | 0,2 à 1,5 |
| MgO | 0 à 3 |
| ∑ CaO + SrO + BaO | 0 à 4 |
| ZnO | 0 à 3 |
| B₂O₃ | 0 à 2 |
| Al₂O₃ | 19 à 23 |
| SiO₂ | 60 à 69 |
| TiO₂ | 1,5 à 6 |
| ZrO₂ | 0,5 à 2 |
| P₂O₅ | 0 à 3 |
| SnO₂ | 0,1 à < 0,6 |
| ∑ TiO₂ + ZrO₂ + SnO₂ | 3,8 à 6 |
et Fe₂O₃ 0,03 à 0,3 en combinaison avec
| | |
|---|---|
| CoO | 0,05 à 0,3 |
| NiO | 0,05 à 0,3 |
| composés de manganèse | > 0 à 2 |
| V₂O₅ | 0 à 0,06 |
| Cr₂O₃ | 0 à 0,3. |

2. Surface de cuisson en vitrocéramique pour chauffage par induction selon la revendication 1, **caractérisée en ce que** la vitrocéramique présente par une température du verre fondu supérieure à 1 700 °C, préférablement supérieure à 1 750 °C, un nombre de bulles inférieur à 3 bulles/kg.

3. Procédé pour la fabrication d'une surface de cuisson en vitrocéramique pour chauffage par induction dotée d'une céramisation rapide du verre de départ cristallisable selon la revendication 1 ou 2 avec une durée totale inférieure à 2 heures, préférablement inférieure à 80 minutes, **caractérisé en ce que** la céramisation est réalisée avec le plan suivant :
a) augmentation de la température du verre cristallisable dans le domaine de température de 680 °C en 1 à 30 minutes ;
b) augmentation de la température du verre cristallisable dans le domaine de température de formation de germes de 680 à 810 °C sur un espace de temps de 8 à 30 minutes ;
c) augmentation de la température du verre contenant des germes de cristallisation en une durée de 2 à 30 minutes dans le domaine de température de vitesse de croissance cristalline élevée de 820 à 970 °C ;
d) maintien dans le domaine de température à la température maximale de 820 à 970 °C jusqu'à 30 minutes pour laisser croître des cristaux du type cristaux mixtes de quartz bêta sur les germes de cristallisation et ensuite ;
e) refroidissement rapide à température ambiante de la vitrocéramique obtenue.

4. Procédé pour la fabrication d'une surface de cuisson en vitrocéramique pour chauffage par induction selon la revendication 3, **caractérisé en ce que** par une température du verre fondu supérieure à 1 700 °C, préférablement supérieure à 1 750 °C, un nombre de bulles inférieur à 3 bulles/kg de verre est atteint.
